# EUROPEAN PATENT APPLICATION

(11) **EP 4 539 302 A1**
(43) Date of publication of application: **16.04.2025**
(21) Application number: 22946739.4
(22) Date of filing: 13.06.2022
(51) Int. Cl.: H02J 50/90, H02J 7/00, H02J 50/10

(54) **WIRELESS POWER SUPPLY SYSTEM**

(71) Applicant: Electron Vexii Co., Ltd., Osaka-shi, Osaka 530-0012 (JP)
(72) Inventor: IKEUCHI, Tomohiko, Osaka-shi, Osaka 530-0011 (JP); TOMIIE, Hirohisa, Kyoto-shi, Kyoto 602-8335 (JP); HONDA, Hironobu, Osaka-shi, Osaka 547-0027 (JP)
(74) Representative: Von Rohr Patentanwälte Partnerschaft mbB
(86) International application number: PCT/JP2022/023670
(87) International publication number: WO 2023/242919

(57) **Abstract**

**[Problem]** To provide a system that allows a wireless power receiving device to be placed in the correct position with a simple configuration.

**[Solution]** A wireless power transmission device (6) is equipped with a transmission-side coil (8). Position indicator LEDs (10a, 10b) are provided on the centerline of the transmission-side coil (8) and are constantly illuminated. LEDs 10a and 10b are positioned symmetrically on either side of the transmission-side coil (8). Power supply indicator LEDs (12a, 12b) are positioned outside LEDs 10a and 10b and are normally off. When the user places a smartphone (20), which is a wireless power receiving device, above the transmission-side coil (8), the wireless power transmission device (6) determines that it is in a state capable of supplying power and turns on LEDs 12a and 12b. This allows the user to confirm that power is being supplied.

## Description

### TECHNICAL FIELD

This invention relates to a wireless power supply system.

### BACKGROUND ART

Wireless power supply is utilized in devices such as smartphones and control devices. For example, power is supplied from a wireless power transmission device to a wireless power reception device via electromagnetic induction between a transmission-side coil provided in the wireless power transmission device and a reception-side coil provided in the wireless power reception device.

At this time, when the reception-side coil of the wireless power reception device and the transmission-side coil of the wireless power transmission device are not properly magnetically coupled by electromagnetic induction, the power supplied may decrease or fail to transmit altogether.

Therefore, for example, in Japanese Laid-open Patent Application Publication No. 2019-170135A, the transmission-side coil of the wireless power transmission device is configured to be movable, and is drive(movement)-controlled to align with the appropriate position relative to the reception-side coil. According to this technique, even when the relative positional relationship between the reception-side coil and the transmission-side coil is misaligned, the positional relationship between the two coils can be adjusted to an optimal position for power transmission.

### SUMMARY OF THE INVENTION

### Problems to be Solved by the Invention

However, in the conventional technology described above, it is necessary to move the transmission-side coil, which complicates the structure of the device. Additionally, there may be operational noise, which can be bothersome during use.

It is the object of the present invention to solve the aforementioned problems by providing a system that allows a wireless power reception device to be placed in an appropriate position with a simplified structure.

### Means for Solving the Problem

Several independently applicable features of this invention are listed below.
(1) A wireless power transmission device according to the present invention comprise: a transmission-side coil for performing wireless power transmission to a receiving-side coil of the wireless power receiving device; a placement surface provided above the transmission-side coil for placing the wireless power receiving device, the placement surface having position marks on either side of a line passing near the center of the transmission-side coil, indicating positions where the wireless power receiving device is to be placed; a controller that obtains information data from the wireless power receiving device through the transmission-side coil and controls the power supply to the transmission-side coil; wherein a power supply indicator that displays the power supply status on the placement surface is provided; and wherein the controller, based on the information data directly or indirectly from the wireless power receiving device, determines whether power can be supplied from the transmission-side coil to the receiving-side coil, and sets the power supply indicator to a first state when it is determined that power cannot be supplied, and sets the power supply indicator to a second state when it is determined that power can be supplied.
   Therefore, the position marks serves as a guide for placing the wireless power receiving device, and the power supply indicator light ensures that the correct position can be accurately identified.
(2) The wireless power transmission device is characterized in that the power supply indicator displays the power supply status on a line passing near the center of the transmission-side coil and outside the position marks.
   Therefore, it becomes easy to confirm that the device is in a power-supplying state.
(3) The wireless power transmission device is characterized in that the power supply indicator is a light emitter provided outside the position marks or a projector that displays the power supply status outside the position marks.
(4) The wireless power transmission device is characterized in that the position marks are formed by light emitters that remain constantly illuminated or by projectors that display the position marks while power is supplied to the wireless power transmission device.
   Therefore, it offers excellent visibility and facilitates easy alignment when placing the wireless power receiving device.
(5) The wireless power transmission device is characterized in that the light emitter used as the power supply indicator is also used as the position mark.
   Therefore, the configuration can be simplified.
(6) The wireless power transmission device is characterized in that the power supply indicator includes a linear light source arranged along a line passing near the center of the transmission-side coil.
   Therefore, it provides excellent visibility and makes alignment easy.
(7) The wireless power transmission device is characterized in that the first state of the power supply indicator is off, and the second state of the power supply indicator is on.
   Therefore, the status can be distinguished by turning the light on and off.
(8) The wireless power transmission device is characterized in that the first state of the power supply indicator is illumination in a first color, and the second state of the power supply indicator is illumination in a second color.
   Therefore, the status can be distinguished by color.
(9) A wireless power transmission device comprising: a transmission-side coil for performing wireless power transmission to a receiving-side coil of a smartphone; a placement surface provided above the transmission-side coil for placing the smartphone, the placement surface including position indicator lights that are always illuminated, positioned on both sides of a line passing near the center of the transmission-side coil, indicating the position for placing the smartphone; a controller that obtains information data from the smartphone through the transmission-side coil and controls the power supply to the transmission-side coil; wherein the placement surface is equipped with power supply indicator lights, wherein at least part of the power supply indicator lights is arranged to be visible on both sides of the smartphone's shorter width when the smartphone is placed in a position where power can be supplied from the transmission-side coil to the smartphone's receiving-side coil, and wherein the controller, based on the information data directly or indirectly from the smartphone, determines whether power can be supplied from the transmission-side coil to the smartphone's receiving-side coil, and sets the power supply indicator lights to a first state when it is determined that power cannot be supplied, and sets the power supply indicator lights to a second state when it is determined that power can be supplied.
   Therefore, the position indicator light serves as a guide for placing the smartphone, and the power supply indicator light ensures the precise position can be identified.
(10) A wireless power supply system comprising a wireless power transmission device and a wireless power receiving device with a flat display, wherein: the wireless power transmission device includes: a transmission-side coil for performing wireless power transmission to a receiving-side coil of the wireless power receiving device; a placement surface provided above the transmission-side coil for placing the wireless power receiving device, the placement surface including position marks on either side of a line passing near the center of the transmission-side coil, indicating the position for placing the wireless power receiving device; a controller that obtains information data from the wireless power receiving device through the transmission-side coil and controls the power supply to the transmission-side coil; the wireless power receiving device includes: a storage that records the position of the receiving-side coil of the wireless power receiving device; receiving-side coil position display means for displaying a position of the receiving-side coil on the flat display at a location corresponding to the recorded position of the receiving-side coil, indicating the position of the receiving-side coil, when in a state capable of receiving power from the wireless power transmission device.
   Therefore, the receiver coil position indicator enables more accurate alignment.
(11) The wireless power supply system is characterized in that the position marks include at least position marks arranged horizontally, and the receiving-side coil position display includes a display corresponding to the vertical centerline of the receiving-side coil and a display corresponding to the horizontal centerline of the receiving-side coil.
   Therefore, alignment in both the vertical and horizontal directions is facilitated.
(12) A wireless power receiving device capable of receiving power from a wireless power transmission device, comprising: a receiving-side coil for receiving power from the transmission-side coil of the wireless power transmission device; a storage that records the position of the receiving-side coil of the wireless power receiving device; power supply display control means for displaying the position of the receiving-side coil on the flat display at a location corresponding to the recorded position of the receiving-side coil, when in a state capable of receiving power from the wireless power transmission device.
   Therefore, aligning the wireless power receiving device becomes easier.
(13) The wireless power transmission device is characterized in that the wireless power receiving device is a smartphone or tablet computer.
   Therefore, aligning smartphones and tablet computers becomes easier.
(14) The wireless power transmission device is characterized in that the wireless power transmission device is a desk with the placement surface serving as the desktop.

Therefore, charging can be performed simply by placing the wireless power receiving device on the desk.

"receiving-side coil position display means" corresponds to Step S35 in the embodiment.

The term "program" refers not only to programs that can be directly executed by a CPU, but also includes programs in source format, compressed programs, and encrypted programs.

### BRIEF DESCRIPTION OF THE DRAWINGS

FIG. 1 is a diagram showing a desk 2 with an embedded wireless power transmission device 6 according to an embodiment of the invention.
FIG. 2 is an enlarged cross-sectional view of the vicinity of the wireless power transmission device 6.
FIG. 3 is a perspective view of the wireless power transmission device 6.
FIG. 4 is the hardware configuration of the controller of the wireless power transmission device 6 and the smartphone 20.
FIG. 5 is a flowchart of the power supply process.
FIG. 6 is a diagram showing the operation of LEDs 10a, 10b as position markers and LEDs 12a, 12b as power supply indicators.
FIG. 7 is a diagram showing an example of position markers and power supply indicators according to another example.
FIG. 8 is an example of the display of the reception-side coil position.
FIG. 9 is an example in which the LED as the position marker and the LED as the power supply indicator are shared.
FIG. 10 is a diagram showing a desk 2 with an embedded wireless power transmission device 6 according to a second embodiment.
FIG. 11 is the hardware configuration of the wireless power transmission device 6 and the smartphone 20.
FIG. 12 is a flowchart of the power supply process.
FIG. 13 is a flowchart of the power supply process.
FIG. 14 is an example of the charging recommendation and the display of the reception-side coil position.
FIG. 15 is an example using a laser irradiator.

### EMBODIMENTS FOR CARRYING OUT THE INVENTION

### 1. First Embodiment

### 1.1 Overview

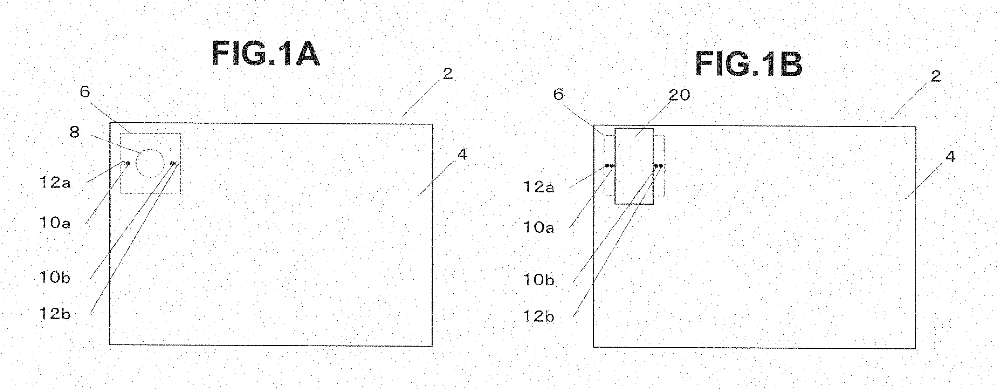

FIGs. 1A and 1B show the appearance of a wireless power transmission device 6 according to one embodiment of this invention. In this embodiment, the device is constructed as a desk with an embedded wireless power transmission device. FIGs. 1A and 1B are top views of the desk 2. The wireless power transmission device 6 is embedded in a part of the backside of the upper board 4 of the desk 2.

As shown in FIG. 1A, the wireless power transmission device 6 is equipped with a transmission-side coil 8. On the central axis of the transmission-side coil 8, LEDs 10a and 10b, which serve as position indicators, are provided. LEDs 10a and 10b are constantly lit by the power supplied to the wireless power transmission device 6. LEDs 10a and 10b are positioned symmetrically on either side of the transmission-side coil 8. Thus, it becomes easy for the user to estimate the position of the transmission coil 8.

Outside of LEDs 10a and 10b, LEDs 12a and 12b are provided as power supply indicators (light-emitting units of the power supply indicator). LEDs 12a and 12b are usually off.

When the user places a smartphone 20, which is a wireless power reception device, on top of the transmission-side coil 8, the wireless power transmission device 6 detects that it is in a state ready for power supply and turns on LEDs 12a and 12b. This allows the user to confirm that power is being supplied.

Additionally, since LEDs 10a and 10b are illuminated, the user can easily identify the position of the transmission-side coil 8 on the large surface area of the desk 2. Furthermore, as LEDs 10a and 10b are positioned symmetrically relative to the transmission-side coil 8, placing the smartphone 20 between them makes it easy to position the device appropriately. The reception-side coil is often located near the center of the smartphone 20 along its longitudinal axis, and since LEDs 10a and 10b are positioned along the central axis of the transmission-side coil 8, it is easy to place the smartphone in the optimal position.

### 1.2 Structure of the Wireless Power Transmission Device

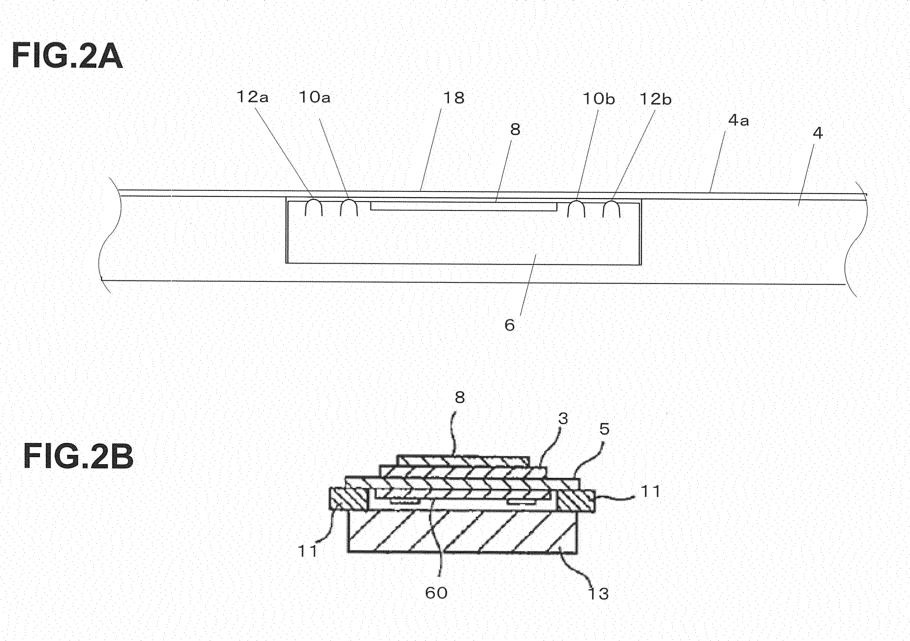

FIG. 2A shows a cross-sectional view of the vicinity of the wireless power transmission device 6 installed in the top board 4 of the desk 2. A recess is provided in the top board 4, and the wireless power transmission device 6 is housed within this recess. On the upper surface of the wireless power transmission device 6, a transmission-side coil 8 is provided, with LEDs 10a, 10b, and LEDs 12a, 12b positioned on either side.

On top of the top board 4, a melamine plate 4a with light-transmitting properties (or another translucent material) is installed, covering the wireless power transmission device 6. The upper surface of the melamine plate 4a serves as the placement surface 18. When LEDs 10a, 10b, LEDs 12a, and 12b are lit, their light passes through the melamine plate 4a, allowing the user to see the light. On the other hand, in this embodiment, since the melamine plate 4a is not a transparent material, the LEDs 10a, 10b, 12a, and 12b are not visible when they are turned off, making it impossible for the user to recognize their presence.

FIG. 2B shows a cross-sectional view of the wireless power transmission device 6. Below the transmission-side coil 8, a magnetic flux control plate 3 is provided to control magnetic flux. Beneath the magnetic flux control plate 3, a heat dissipation plate 5 is provided.

At the bottom, a base plate (not shown) is provided, on which a cooling fan 13 is mounted. A spacer 11 is positioned between the cooling fan 13 and the heat dissipation plate 5, creating a space. Within this space, a control unit 60 is housed.

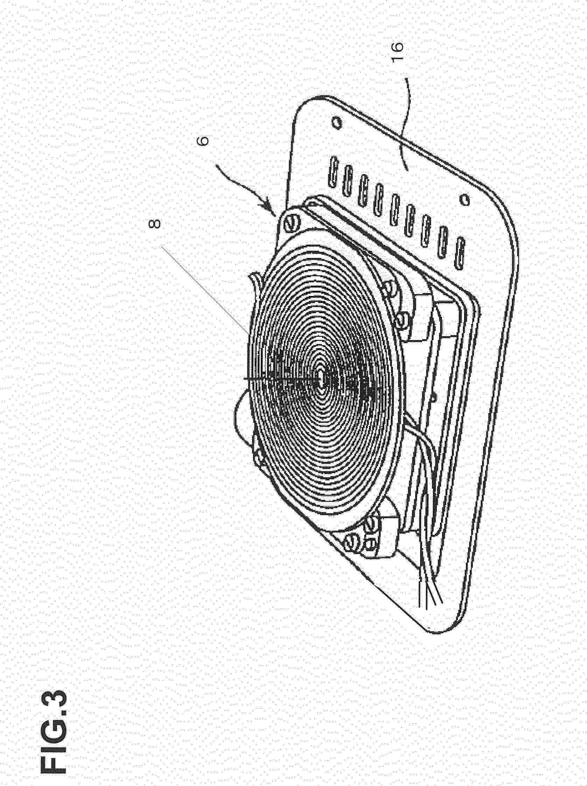

FIG. 3 shows a perspective view of the wireless power transmission device 6. A transmission coil 8 is provided at the top.

### 1.3 Hardware Configuration

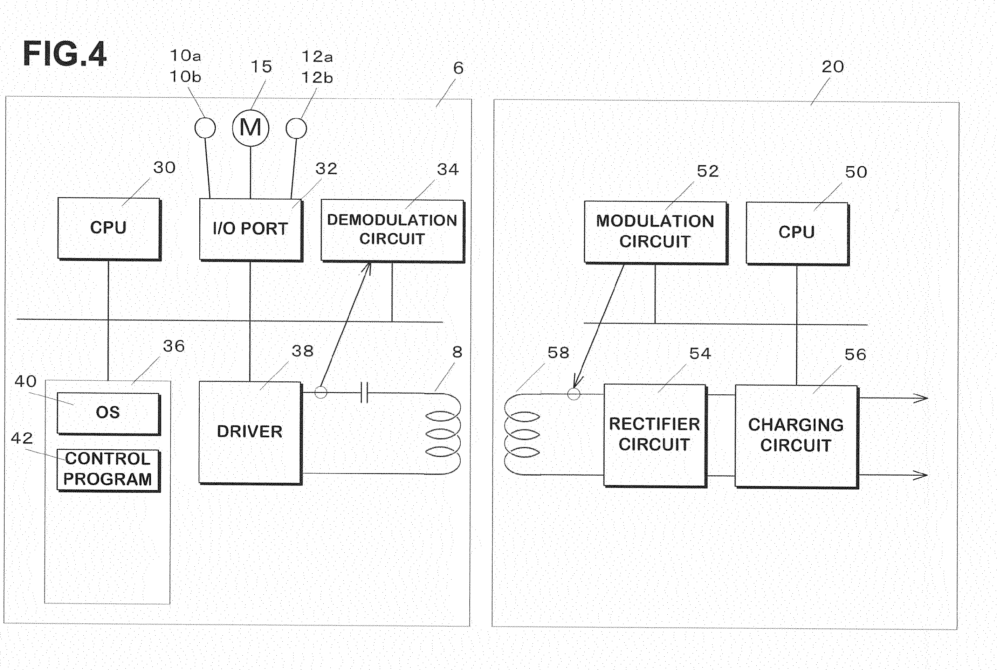

FIG. 4 shows the controller of the wireless power transmission device 6 and the controller of the smartphone 20. The CPU 30 of the wireless power transmission device 6 is connected to an I/O port 32, a demodulation circuit 34, a non-volatile memory 36, and a driver 38. LEDs 10a, 10b, 12a, 12b, and the motor 15 of the cooling fan 13 are connected to the I/O port 32. LEDs 10a and 10b are controlled to remain constantly lit. Note that LEDs 10a and 10b may also be directly connected to the power circuit to remain lit at all times.

The driver 38 controls the frequency and duty ratio of the AC signal applied to the transmission-side coil 8. Through this control, the power being transmitted can be regulated.

The non-volatile memory 36 stores the operating system 40 (e.g., TRON) and a control program 42. The control program 42 functions in cooperation with the operating system 40.

The CPU 50 of the smartphone 20 is connected to a modulation circuit 52 and a charging circuit 56. The CPU 50 is dedicated to controlling wireless charging, and another CPU is provided to control the overall smartphone 20. Note that data exchange is possible between the CPU 50 and the CPU that controls the entire smartphone. The CPU 50 controls various components based on the operating system and control program stored in a non-volatile memory (not shown).

The rectifier circuit 54 rectifies the high-frequency signal received by the reception-side coil 58 and converts it to DC. The charging circuit 56 steps up or steps down the output of the rectifier circuit 54 to a desired voltage, charging the secondary battery of the smartphone 20.

In this embodiment, based on the Qi standard, backscatter modulation is used to enable data transmission from the smartphone 20 to the wireless power transmission device 6. The CPU 50 of the smartphone 20 performs data communication as follows. The CPU 50 provides the data to be transmitted to the modulation circuit 52. The modulation circuit 52 amplitude-modulates the voltage of the reception-side coil 58 based on this data. The change in amplitude is transmitted to the transmission-side coil 8 via electromagnetic induction. The demodulation circuit 34 detects this amplitude change and demodulates the data, which the CPU 30 then retrieves.

In this way, data can be transmitted from the smartphone 20 to the wireless power transmission device 6.

### 1.4 Power Supply Process

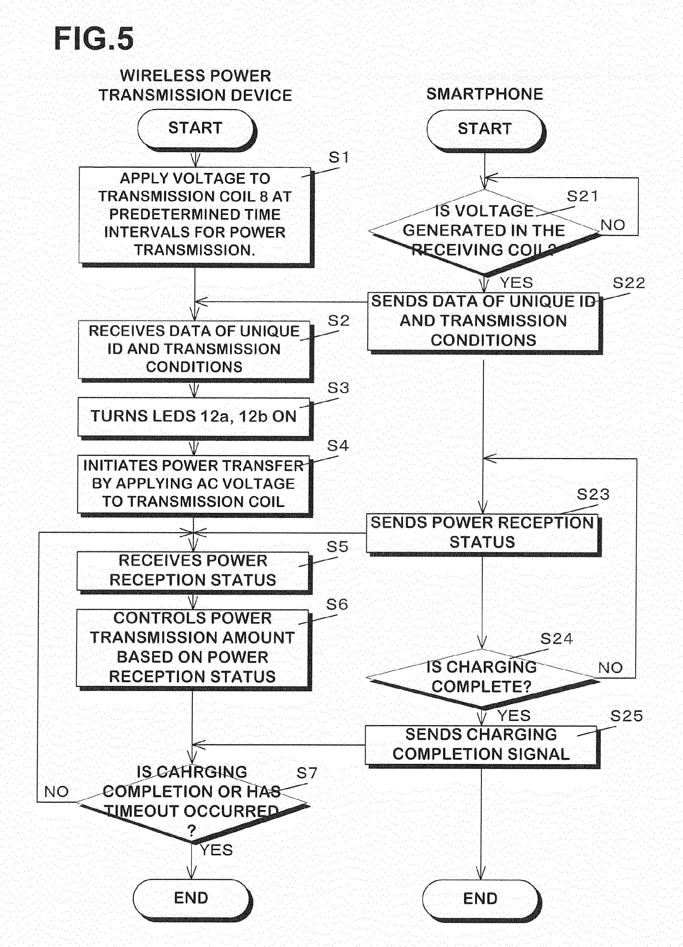

FIG. 5 shows a flowchart of the power supply process. The left side represents the control program 42 of the wireless power transmission device 6, and the right side represents the control program of the smartphone 20.

The CPU 30 of the wireless power transmission device 6 (hereafter, sometimes referred to as the wireless power transmission device 6) controls the driver 38 to apply a voltage of a predetermined frequency to the transmission-side coil 8 at predetermined time intervals (e.g., every 600 msec) (Step S1). At this time, when the smartphone 20 is not placed on the placement surface 18, there is no communication from the smartphone 20. Therefore, the wireless power transmission device 6 continues to repeat the voltage application at the predetermined intervals.

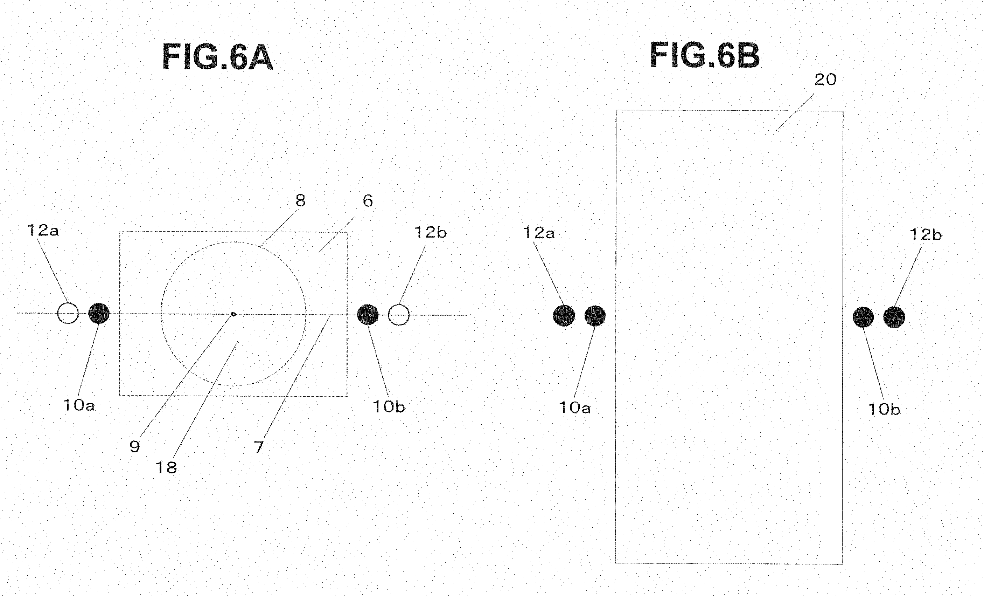

FIG. 6A shows the state near the wireless power transmission device 6 when the smartphone 20 is not placed on the placement surface 18. LEDs 10a and 10b, arranged on a straight line 7 that passes through the center point 9 (or near it) of the transmission-side coil 8, which is wound in a circular shape, are illuminated. Since LEDs 10a and 10b are positioned symmetrically on either side of the transmission coil 8, the user can easily estimate the position of the transmission coil 8. Therefore, it is preferable that the distance between LEDs 10a and 10b is greater than the width of the smartphone 20.

Outside of LEDs 10a and 10b, LEDs 12a and 12b are also arranged along the straight line 7. In the state shown in FIG. 6A, LEDs 12a and 12b are off.

When the smartphone 20 is placed on the placement surface 18, the AC voltage applied to the transmission-side coil 8 is transmitted to the reception-side coil 58 via electromagnetic induction. The CPU 50 of the smartphone 20 (hereafter, sometimes referred to as the smartphone 20) determines whether an AC voltage is generated in the reception coil 18 (Step S21). Upon receiving the AC voltage from the wireless power transmission device 6, it proceeds to execute Step S22.

In Step S22, the smartphone 20 uses the modulation circuit 52 to amplitude-modulate the AC voltage with data indicating unique identification information of the smartphone 20 and power transmission conditions (conditions such as the power (in watts) that can be received). This amplitude modulation also affects the transmission coil 8. The demodulation circuit 34 of the wireless power transmission device 6 demodulates the amplitude-modulated AC voltage to obtain the unique identification information and power transmission conditions. The CPU 30 of the wireless power transmission device 6 retrieves this information (Step S2).

The wireless power transmission device 6 acquires the unique identification information and power transmission conditions from the smartphone 20. When (the power transmission conditions of) the smartphone 20 matches the wireless power supply standard used by the device, the system controls LEDs 12a and 12b to turn on (Step S3). At this time, the wireless power transmission device 6 also activates the motor 15 to operate the cooling fan 13.

FIG. 6 shows the state when the smartphone 20 is placed on the placement surface 18. LEDs 12a and 12b are also illuminated, indicating that the smartphone 20 is correctly positioned and power transmission has started.

Next, the wireless power transmission device 6 begins applying an AC voltage to the transmission coil 8 based on the received power transmission conditions, initiating power transfer (Step S4). The smartphone 20 receives the AC voltage through the reception-side coil 58, and the rectifier circuit 54 and charging circuit 56 work together to charge the smartphone's secondary battery (storage battery).

The smartphone 20 detects the voltage of the charging circuit 58 and, using this as power reception status data, transmits it to the wireless power transmission device 6 via the modulation circuit 52 (Step S23).

The wireless power transmission device 6 obtains the power reception status data via the demodulation circuit 34 (Step S5). Subsequently, based on this power reception status data, the wireless power transmission device 6 performs feedback control of the power transmission amount (Step S6). For example, when the power reception level is low, the device increases the transmission amount, and when the reception level is high, it decreases the transmission amount. The wireless power transmission device 6 controls the transmission amount by adjusting the frequency or duty cycle of the AC voltage applied to the transmission-side coil 8.

In this way, charging through wireless power transmission is carried out. The smartphone 20 monitors the control status of the charging circuit 56 to determine whether charging is complete (Step S24). If charging is not complete, it repeats Step S23.

When charging is complete, the smartphone 20 transmits the charging completion signal via the modulation circuit 52 (Step S25). The wireless power transmission device 6 receives the charging completion signal via the demodulation circuit 34 (Step S7) and then terminates the process.

The wireless power transmission device 6 also terminates the process when the smartphone 20 is moved from the placement surface 18 and there is no data communication from the smartphone 20 for a predetermined period. In this case, the wireless power transmission device 6 turns off LEDs 12a and 12b, informing the user that charging is not taking place.

As described above, when placing the smartphone 20 in the designated position for charging, the approximate location can be confirmed by LEDs 10a and 10b. Additionally, when the smartphone 20 is placed in the correct position, LEDs 12a and 12b light up, allowing the user to confirm that charging is properly underway.

The configuration of the wireless power transmission device 6 shown in FIG. 4 may also use custom ICs for wireless power transmission, such as Kington's KT-CG10W3 or Texas Instruments' bp500211. In this case, when the signal terminal indicating the start of charging is turned ON, LEDs 12a and 12b can be illuminated accordingly.

### 1.5 Other Considerations

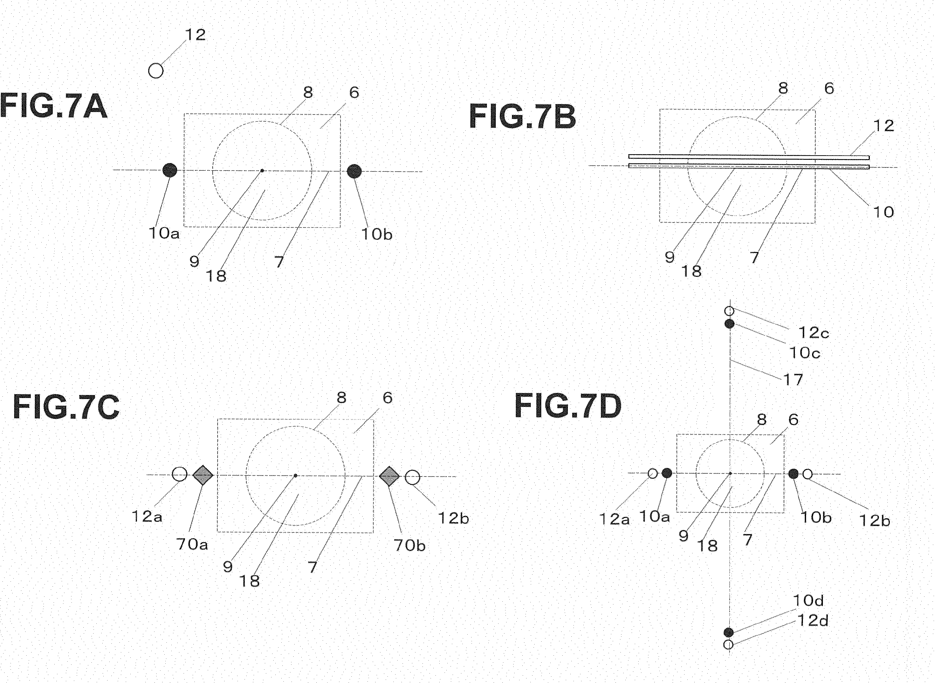

(1) In the above embodiment, LEDs 10a and 10b (the position markers) and LEDs 12a and 12b (the power supply indicators) are arranged on the centerline of the transmission-side coil 8 (or on a line within 10 mm of the centerline). However, it is not necessary to position these on the centerline of the transmission-side coil 8.
   Nevertheless, it is preferable to place at least the position markers along the centerline to facilitate easy position confirmation. For example, as shown in FIG. 7A, it is also possible to provide only one LED 12 as the power supply indicator in the upper left corner.
(2) In the above embodiment, LEDs 10a and 10b (the position markers) and LEDs 12a and 12b (the power supply indicators) are point light sources. However, as shown in FIG. 7B, it is also possible to use linear LEDs 10 and 12. The position marker LED 10 is controlled to remain constantly lit, while the power supply indicator LED 12 is lit only during power transmission. In this case, it is preferable for the length of LEDs 10 and 12 to be greater than the width of the smartphone 20.
   Additionally, a combination of linear LEDs and point LEDs may be used. Furthermore, characters (such as "Charging Position") or symbols may be displayed as position markers using light sources. Similarly, for the power supply indicators, light sources displaying characters (such as "Charging") or symbols may be used.
(3) In the above embodiment, LEDs are used. However, other display devices, such as organic EL or LCD, may also be used.
   Furthermore, a screen display may be installed above the wireless power transmission device 6, on which the position markers and power supply indicators can be displayed.
(4) In the above embodiment, the position markers are composed of light sources, LEDs 10a and 10b. However, printed marks, recesses, or protrusions on the placement surface 18 may also serve as position markers. Additionally, embedded components of different colors from the upper board 4 can be used as position markers. FIG. 7C shows an example in which the position markers are printed marks 70a and 70b. Position markers created by printing or other means can be in a line rather than a point and may also take the form of characters or symbols.
(5) In the above embodiment, LEDs 10a and 10b as the position marker and LEDs 12a and 12b as the power supply indicator are arranged on the horizontal centerline 7. However, as shown in FIG. 7D, LEDs 10c and 10d as the position marker and LEDs 12c and 12d as the power supply indicator may also be arranged on the vertical centerline 17. Alternatively, LEDs 10c and 10d as the position marker and LEDs 12c and 12d as the power supply indicator may be arranged solely on the vertical centerline 17.
(6) In addition to the above embodiment, when power reception begins on the smartphone 20 side (Steps S22 and S23), the CPU that controls the entire smartphone 20 may detect this and perform the following processing. The CPU reads the position of its reception-side coil, which is pre-recorded. It then displays the reception-side coil position on the corresponding location on the display for positioning purposes.

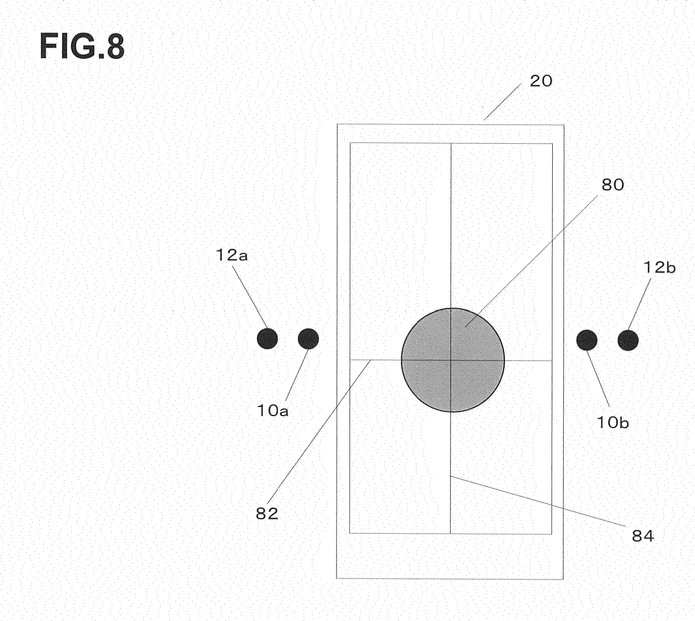

FIG. 8 shows an example of the display of the reception-side coil position on the smartphone display. For efficient power transmission, it is preferable that the positions of the transmission-side coil 8 and the reception-side coil 18 are aligned. While a slight misalignment is permissible, it may reduce transmission efficiency.

In the example shown in FIG. 8, the mark 80 indicating the position of the reception-side coil 18 is slightly misaligned downward from the LEDs 10a and 10b, which mark the position of the transmission-side coil 8. The user can adjust the position of the smartphone 20 to align these marks. In this process, the horizontal centerline 82 displayed on the screen serves as a reference for alignment.

If the position is misaligned horizontally (which is particularly useful in cases like tablets), the vertical centerline 84 can be used as an alignment reference.

Additionally, in FIG. 8, LEDs 12a and 12b are provided as power supply indicators. However, it is also possible to use the reception-side coil position display 80 as the power supply indicator and omit LEDs 12a and 12b.

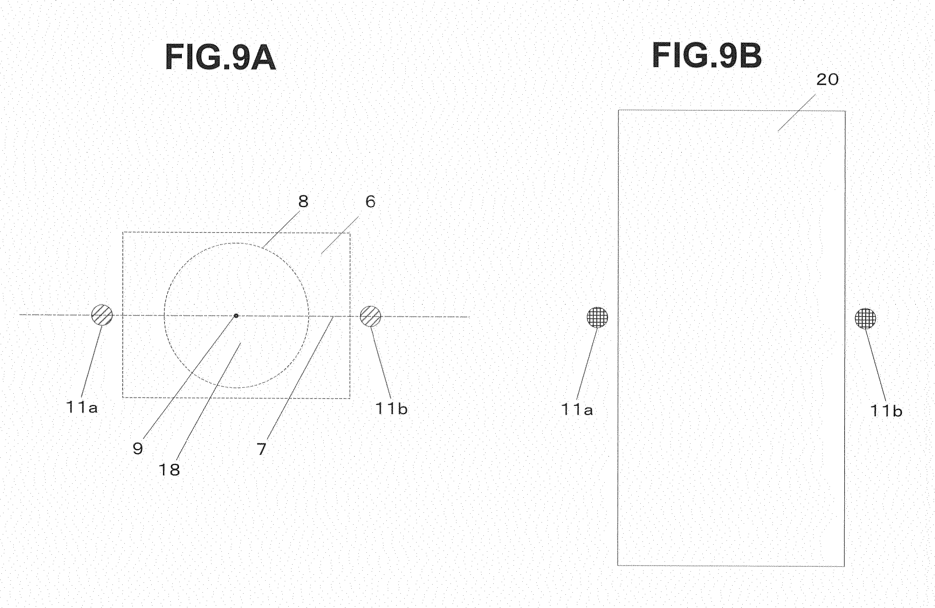

(7) In the above embodiment, LEDs 10a and 10b are provided as position markers, and LEDs 12a and 12b are provided as power supply indicators. However, as shown in FIG. 9, these functions may be combined into shared LEDs 11a and 11b.

As shown in FIG. 9A, when the smartphone 20 is not placed on the surface, LEDs 11a and 11b are controlled by the CPU 30 to emit a first color (for example, orange). As shown in FIG. 9B, when the smartphone 20 is placed, LEDs 11a and 11b are controlled by the CPU 30 to emit a second color (for example, blue).

Alternatively, the LEDs can emit the same color in both state but be distinguished by varying the illumination pattern (such as lighting intervals).

(8) In the above embodiment, LEDs 10a, 10b, 12a, and 12b are placed beneath a translucent, non-transparent melamine plate 4a. However, these LEDs may be placed under a transparent thin plate, allowing them to be visible even when turned off. Alternatively, LEDs 10a, 10b, 12a, and 12b may be configured to remain visible even when turned off, without being covered by the melamine plate 4a.

In this case, the LEDs can remain off until the smartphone 20 is placed, at which point they would turn on. Unlit LEDs 11a and 11b would then serve as position markers. The light sources could also be configured in lines, or to display characters or symbols, instead of just points.

(9) In the above embodiment, the smartphone 20 was used as an example of a wireless power reception device. However, this system can be applied to any device requiring power supply, such as tablet computers, desktop and laptop computers, desktop fans, small lighting devices like task lights, transmitters for WiFi, or shoes equipped with GPS receivers. Although the embodiment described charging, it can also be applied to devices that operate directly via wireless power supply without charging.

(10) In the above embodiment, the case where the wireless power transmission device 6 is embedded in a desk was described. However, as long as it can hold a wireless power reception device like a smartphone 20, it may be embedded in other furniture such as tables or shoe boxes, or in surfaces like floors or walls (which would require a mechanism to hold the smartphone 20).

Additionally, the wireless power transmission device 6 may be used independently as a charging or power supply device without being embedded.

(11) In the above embodiment, wireless power transmission based on the Qi standard was described; however, this can also be applied to wireless power transmission systems based on other standards, such as the PMA or Rezence standards.

(12) The above embodiment and its variations can be implemented in combination with other embodiments and their variations, as long as they do not deviate from the essence of the invention.

### 2. Second Embodiment

### 2.1 Overview

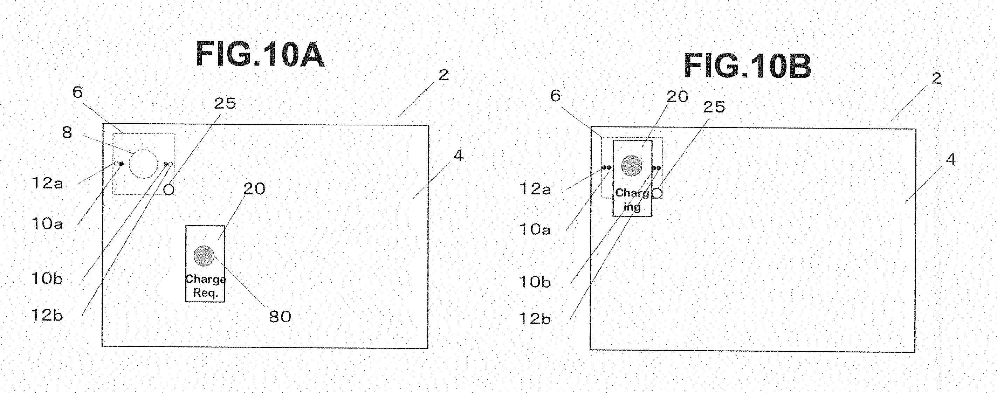

FIG. 10 shows an overview of the wireless power transmission system according to the second embodiment. In this embodiment, the wireless power transmission device 6 is equipped with an NFC transceiver 25.

When the NFC transceiver (not shown) of the smartphone 20 approaches the wireless power transmission device 6, it can receive signals from the NFC transceiver 25, allowing the smartphone 20 to detect the proximity of the wireless power transmission device 6.

The smartphone 20 obtains its remaining battery level and, when the level falls below a threshold, displays a recommendation on the screen to begin charging. Additionally, the smartphone reads the position of its reception-side coil for wireless power transfer, which is recorded, and displays the reception coil position indicator 80 at the corresponding location on the display.

The user intending to charge the smartphone places it between the position marker LEDs 10a and 10b as a guide. At this time, the reception-side coil position indicator 80 displayed on the smartphone's screen allows for precise alignment.

When the smartphone 20 is placed, the power supply indicator LEDs 12a and 12b light up, as in the first embodiment.

According to this embodiment, when the battery level of the smartphone 20 or similar device is low, a message prompting charging can be displayed on the smartphone 20 when a wireless power transmission device 6 is nearby.

Furthermore, since the position of the reception-side coil is displayed on the screen, alignment is made easier.

### 2.2 Structure of the Wireless Power Transmission Device

The basic structure of the wireless power transmission device 6 is the same as in the first embodiment. However, it differs in that it includes an NFC transceiver 25. The NFC transceiver 25 may be integrated with the wireless power transmission device 6 or provided separately.

### 2.3 Hardware Configuration

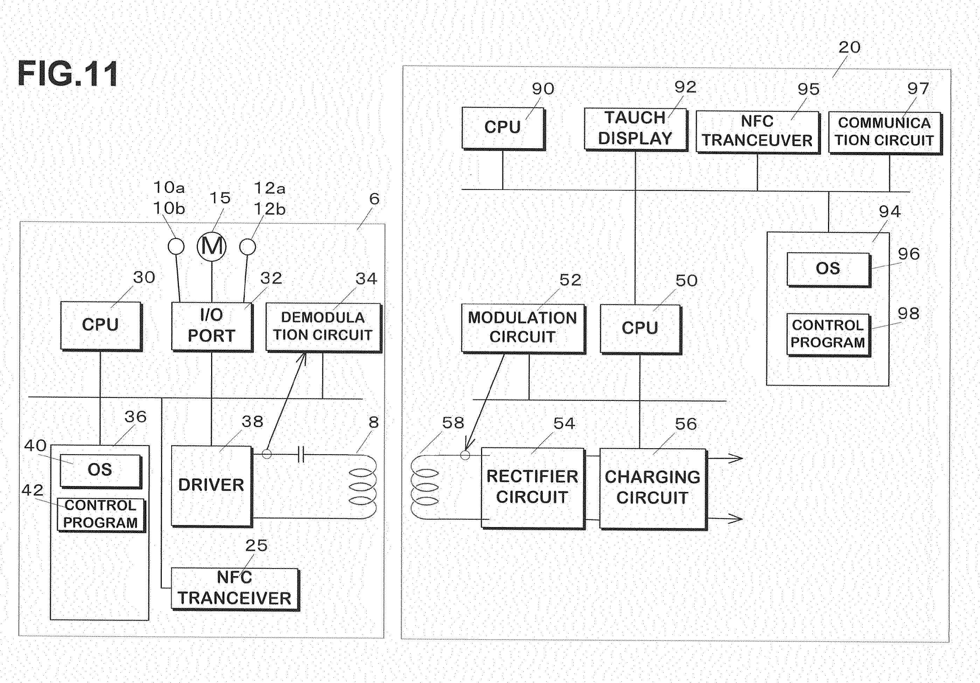

FIG. 11 shows the hardware configuration of the wireless power transmission device 6 and the smartphone 20. The configuration of the wireless power transmission device 6 is the same as in the first embodiment, except that the NFC transceiver 25 is connected to the CPU 30, allowing it to be controlled by the CPU 30.

In FIG. 11, CPU 90, which controls the entire smartphone 20, is shown. Connected to CPU 90 are the touch display 92, NFC transceiver 95, communication circuit 97, and non-volatile memory 94. The communication circuit 97 enables internet connectivity. Components such as the call circuit are omitted from the figure. Additionally, CPU 90 is configured to exchange data with CPU 50, which controls wireless power reception.

The non-volatile memory 94 stores the operating system 96 and control program 98. The control program 98 functions in cooperation with the operating system 96.

### 2.4 Power Supply Process

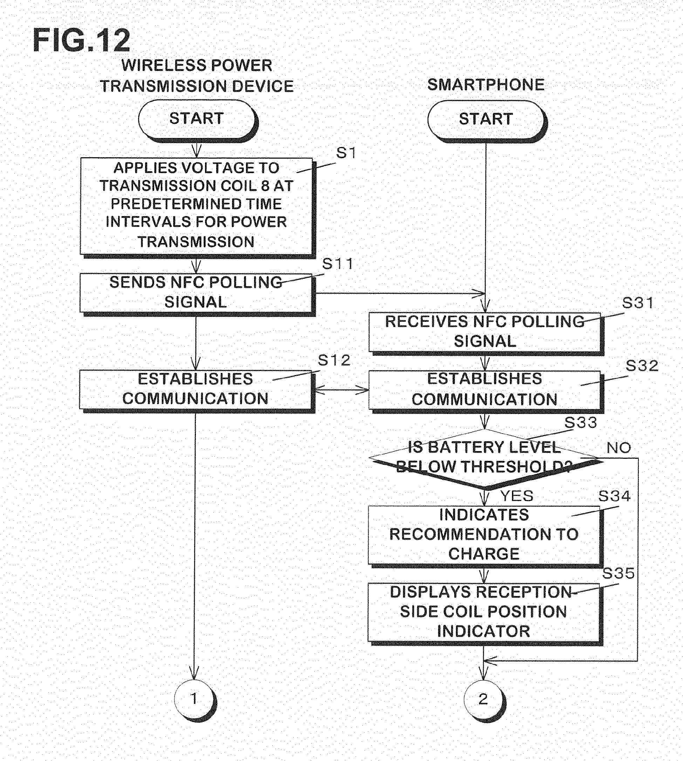

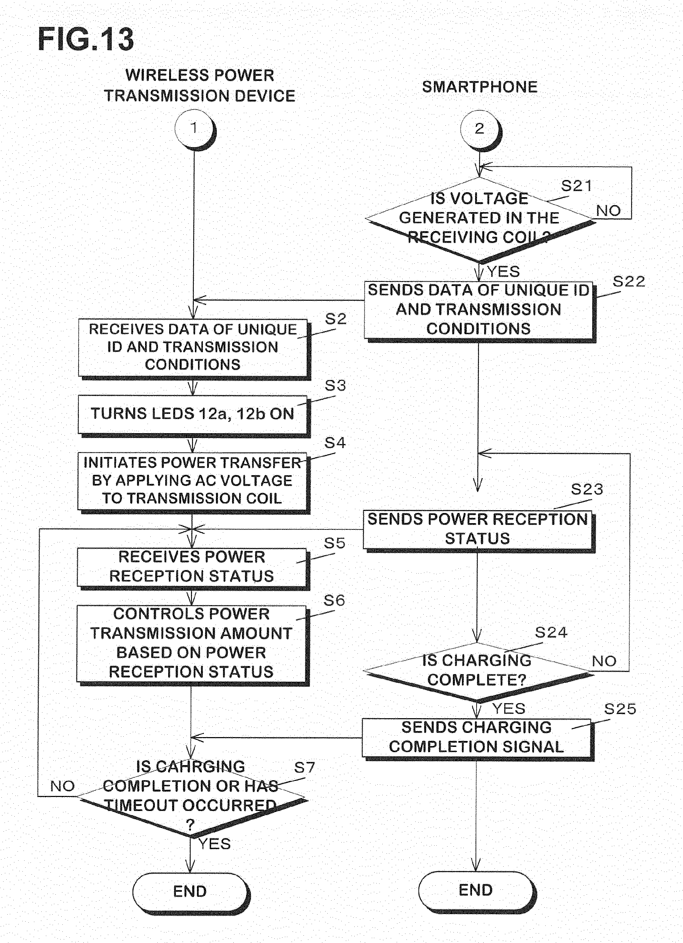

FIGs. 12 and 13 show flowcharts of the power supply process. In FIG. 12, the left side represents the processing of the control program 42 of the wireless power transmission device 6, while the right side represents the processing of the control program 98 of the smartphone 20.

The CPU 30 of the wireless power transmission device 6 (hereafter sometimes referred to simply as the wireless power transmission device 6) applies an AC voltage to the transmission coil 8 at predetermined time intervals (Step S1). This process is the same as in the first embodiment.

Additionally, the wireless power transmission device 6 controls the NFC transceiver 25 (or operates autonomously) to send a polling signal (Step S11). As shown in FIG. 10, if the smartphone 20 is in the vicinity of the wireless power transmission device 6, the NFC transceiver 95 of the smartphone 20 receives this polling signal and establishes communication with the NFC transceiver 25 by confirming the communication method and identifying the other party (Steps S12, S32).

The CPU 90 of the smartphone 20 (hereafter sometimes referred to as smartphone 20) detects the proximity of the wireless power transmission device 6 upon establishing communication with the NFC transceiver 25 of the wireless power transmission device 6. The smartphone 20 then checks whether its remaining battery level is below a predetermined threshold (for example, 30%) (Step S33). When the remaining battery level is above the predetermined threshold, it proceeds to Step S21 in FIG. 13.

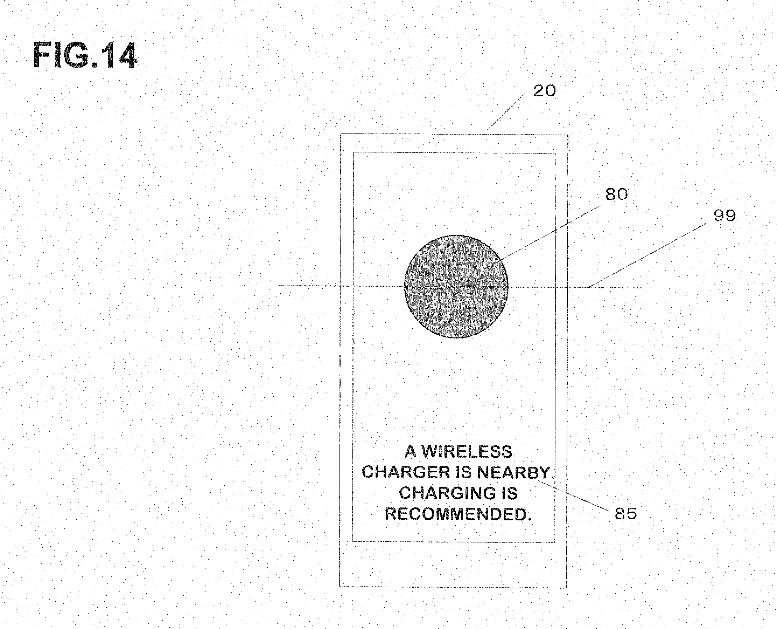

When the remaining battery level is below the predetermined threshold, indicating insufficient charge, the smartphone 20 displays a recommendation to charge on the touch display 92 (Step S34). An example of the displayed recommendation is shown in FIG. 14.

Next, the smartphone 20 reads the position information of its reception-side coil 58, which is recorded in the non-volatile memory 94. The position of the reception-side coil 58 is specific to each smartphone model and is pre-recorded in the non-volatile memory 94.

Alternatively, a server (not shown) that has previously gathered information on the reception-side coil 58 positions for each model from various manufacturers could be used. The smartphone 20 could send its model number to this server to retrieve the position information for the reception-side coil 58.

In this embodiment, the position of the reception-side coil 58 is represented by recording the center point coordinates of the reception-side coil 58 in a database on the server. The coordinates are defined on an XY axis with the origin at the bottom-left corner of the touch display 92, where the horizontal (Y) and vertical (X) directions are used to specify the location.

Although the size of the reception-side coil 58 varies by model, in this embodiment, it is assumed to be of uniform size, as only the center point is necessary. Of course, the size of the reception coil 58 could also be registered in the database.

The smartphone 20 displays the reception-side coil position indicator 80 on the touch screen display 92 at the location corresponding to the retrieved position of the reception coil 58 (Step S35). FIG. 14 shows an example of the reception-side coil position indicator 80.

Since the user can see that the reception-side coil 58 is located at this position, they can easily and accurately align it by matching the line connecting the position markers 10a and 10b on the desk 2 with the centerline 99 of the reception-side coil position indicator 80.

The reception coil position indicator 80 may also be displayed in a form similar to that shown in FIG. 8.

The process after the smartphone 20 is placed in the position shown in FIG. 10B is the same as in the first embodiment (see FIG. 13).

As described above, according to this embodiment, when the battery level is low, it is possible to indicate the presence of a nearby wireless power transmission device 6 and to provide a display that makes alignment easier.

### 2.5 Other Considerations

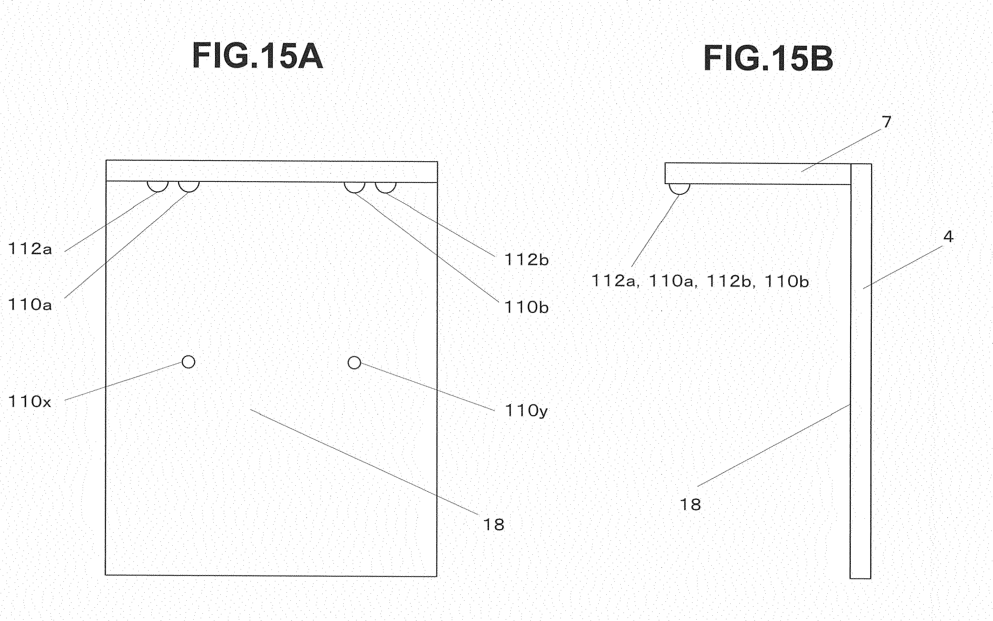

(1) In the above embodiment, both the charging recommendation and the reception-side coil position display are provided. However, it is also possible to perform one of these functions.
   Additionally, although the above processes (charging recommendation and reception-side coil position display) are performed only when the battery level is below a predetermined threshold, these processes may be carried out regardless of the battery level.
(2) In the above embodiment, the charging recommendation is provided as a display on the touch display 92. However, it may also be output through sound or vibration (controlled by the CPU 90 to activate a vibrator).
(3) In each of the above first and second embodiments, to display position and power supply indications on the placement surface 18 of the upper board 4, LEDs 10a, 10b, 12a, and 12b are embedded in the upper board 4. That is, LEDs are used as the light-emitting elements for the power supply indicator and for position indicator. However, as an alternative, as shown in FIGs 15A and 15B, a vertical plate 7 may be fixed to the upper board 4, and laser light sources 110a, 110b, 112a, and 112b may be provided on the vertical plate 7. As shown in FIG 15A, projections 110x and 110y for position indication are displayed on the placement surface 18 by the laser light sources 110a and 110b. When a smartphone 20 is placed on charging position, projections for power supply indication are displayed outside 110x and 110y by the laser light sources 112a and 112b. The projection control is similar to the lighting control of the LEDs.
(4) The above embodiment and its modifications can be implemented in combination with other embodiments and their modifications, as long as it does not deviate from the essence of the invention.

## Claims

1. A wireless power transmission device comprising:
a transmission-side coil for performing wireless power transmission to a receiving-side coil of the wireless power receiving device;
a placement surface provided above the transmission-side coil for placing the wireless power receiving device, the placement surface having position marks on either side of a line passing near the center of the transmission-side coil, indicating positions where the wireless power receiving device is to be placed;
a controller that obtains information data from the wireless power receiving device through the transmission-side coil and controls the power supply to the transmission-side coil;
wherein a power supply indicator that displays the power supply status on the placement surface is provided; and
wherein the controller, based on the information data directly or indirectly from the wireless power receiving device, determines whether power can be supplied from the transmission-side coil to the receiving-side coil, and sets the power supply indicator to a first state when it is determined that power cannot be supplied, and sets the power supply indicator to a second state when it is determined that power can be supplied.

2. The wireless power transmission device according to Claim 1, wherein the power supply indicator displays the power supply status on a line passing near the center of the transmission-side coil and outside the position marks.

3. The wireless power transmission device according to Claim 1 or 2, wherein the power supply indicator is a light emitter provided outside the position marks or a projector that displays the power supply status outside the position marks.

4. The wireless power transmission device according to Claim 1 or 2, wherein the position marks are formed by light emitters that remain constantly illuminated or by projectors that display the position marks while power is supplied to the wireless power transmission device.

5. The wireless power transmission device according to Claim 1 or 2, wherein the light emitter used as the power supply indicator is also used as the position mark.

6. The wireless power transmission device according to Claim 5, wherein the power supply indicator includes a linear light source arranged along a line passing near the center of the transmission-side coil.

7. The wireless power transmission device according to any one of Claims 1 to 6, wherein the first state of the power supply indicator is off, and the second state of the power supply indicator is on.

8. The wireless power transmission device according to any one of Claims 1 to 6, wherein the first state of the power supply indicator is illumination in a first color, and the second state of the power supply indicator is illumination in a second color.

9. A wireless power transmission device comprising:
a transmission-side coil for performing wireless power transmission to a receiving-side coil of a smartphone;
a placement surface provided above the transmission-side coil for placing the smartphone, the placement surface including position indicator lights that are always illuminated, positioned on both sides of a line passing near the center of the transmission-side coil, indicating the position for placing the smartphone;
a controller that obtains information data from the smartphone through the transmission-side coil and controls the power supply to the transmission-side coil;
wherein the placement surface is equipped with power supply indicator lights,
wherein at least part of the power supply indicator lights is arranged to be visible on both sides of the smartphone's shorter width when the smartphone is placed in a position where power can be supplied from the transmission-side coil to the smartphone's receiving-side coil, and
wherein the controller, based on the information data directly or indirectly from the smartphone, determines whether power can be supplied from the transmission-side coil to the smartphone's receiving-side coil, and sets the power supply indicator lights to a first state when it is determined that power cannot be supplied, and sets the power supply indicator lights to a second state when it is determined that power can be supplied.

10. A wireless power supply system comprising a wireless power transmission device and a wireless power receiving device with a flat display, wherein:
the wireless power transmission device includes:
a transmission-side coil for performing wireless power transmission to a receiving-side coil of the wireless power receiving device;
a placement surface provided above the transmission-side coil for placing the wireless power receiving device, the placement surface including position marks on either side of a line passing near the center of the transmission-side coil, indicating the position for placing the wireless power receiving device;
a controller that obtains information data from the wireless power receiving device through the transmission-side coil and controls the power supply to the transmission-side coil;
the wireless power receiving device includes:
a storage that records the position of the receiving-side coil of the wireless power receiving device;
receiving-side coil position display means for displaying a position of the receiving-side coil on the flat display at a location corresponding to the recorded position of the receiving-side coil, indicating the position of the receiving-side coil, when in a state capable of receiving power from the wireless power transmission device.

11. The wireless power supply system according to Claim 10, wherein the position marks include at least position marks arranged horizontally, and the receiving-side coil position display includes a display corresponding to the vertical centerline of the receiving-side coil and a display corresponding to the horizontal centerline of the receiving-side coil.

12. A wireless power receiving device capable of receiving power from a wireless power transmission device, comprising:
a receiving-side coil for receiving power from the transmission-side coil of the wireless power transmission device;
a storage that records the position of the receiving-side coil of the wireless power receiving device;
power supply display control means for displaying the position of the receiving-side coil on the flat display at a location corresponding to the recorded position of the receiving-side coil, when in a state capable of receiving power from the wireless power transmission device.

13. The system or device according to any one of Claims 9 to 12, wherein the wireless power receiving device is a smartphone or tablet computer.

14. The system or device according to any one of Claims 1 to 13, wherein the wireless power transmission device is a desk with the placement surface serving as the desktop.
